# EUROPEAN PATENT SPECIFICATION

(11) **EP 3 233 684 B1**
(45) Date of publication and mention of the grant of the patent: **02.01.2019**
(21) Application number: 15801193.2
(22) Date of filing: 11.11.2015
(51) Int. Cl.: B65H 49/34, B23K 9/133

(54) **A WIRE REEL HUB FOR A WELDING WIRE FEEDER**
DRAHTSPULENNABE FÜR EINEN SCHWEISSDRAHTZUFÜHRER
MOYEU DE BOBINE DE FIL DESTINÉ À UNE TÊTE DE SOUDAGE

(30) Priority: 16.12.2014 FI 20146101
(43) Date of publication of application: 25.10.2017
(73) Proprietor: Kemppi Oy, 15801 Lahti (FI)
(72) Inventor: ANTTONEN, Risto, 15100 Lahti (FI); HÄMÄLÄINEN, Jani, 15500 Lahti (FI)
(74) Representative: Boco IP Oy Ab
(86) International application number: PCT/FI2015/050783
(87) International publication number: WO 2016/097466

(56) References cited:
- EP-A1- 0 803 310
- DE-A1- 4 429 267
- JP-A- S5 982 269
- JP-A- H02 310 268
- JP-A- H05 211 199
- JP-A- H06 335 826
- JP-A- 2014 208 366
- KR-B1- 100 939 420
- US-A- 4 003 525

## Description

### FIELD OF THE INVENTION

The present invention relates to a wire reel hub, and particularly to a wire reel hub for supporting a wire reel in a welding system comprising a wire feeder comprising a wire reel hub support means for supporting the wire reel hub.

### BACKGROUND OF THE INVENTION

A purpose of a welding wire feeder is to support a welding wire reel and to feed the welding wire to a welding gun. The wire feeder is provided with a wire driving means comprising rollers for driving the wire from the wire reel to the welding gun. The excessive rotation of the wire reel is usually limited by a frictional brake adjusted by user.

A problem with the traditional wire feeder is that if the wire reel is heavy, due to the inertia of the heavy reel, it might be difficult to get into a rotating motion. While driving the welding wire, the rollers of the wire driving means may even cause damage to the welding wire. On the other hand, when welding work ends and wire driving means stops, the mass of the wire reel causes unwanted unwinding of the welding wire if the frictional brake is not adjusted correctly.

Another problem with the traditional wire feeder is that it only allows unwinding of the welding wire from the wire reel. After finishing with the welding job, the unwound and unused wire must be rewound by hand. Also, when the welding job is paused, due to the inertial rotation of the wire reel, the welding wire is left loose. This may cause unevenness in the weld.

EP 0 803 310 A1 and JP 2014 208366 A disclose a wire reel hub according to the preamble of independent claim 1.

### BRIEF DESCRIPTION OF THE INVENTION

An object of the present invention is to provide a wire reel hub so as to overcome the above problems.

The object of the invention is achieved by a wire reel hub which is characterized by what is stated in the independent claim. The preferred embodiments of the invention are disclosed in the dependent claims.

The invention is based on the idea of providing a wire reel hub for supporting a wire reel in a welding system comprising a wire feeder comprising a wire reel hub support means for supporting the wire reel hub, the wire reel hub comprising
a static part being adapted to be connected unrotatably to the wire reel hub support means,
a rotatable part connected rotatably to the static part,
an electric motor connected to the static part and to the rotatable part for controlling rotation of the rotatable part in relation to the static part,
a power supply means for powering the electric motor, and
a receiving means for receiving a wire reel coaxially with the wire reel hub.

An advantage of the wire reel hub of the invention is that the wire reel hub rotates the wire reel in the wire feeder for unwinding the welding wire and thus reduces the need for rotating the wire reel using the wire driving means. This reduces the risk of damaging the welding wire.

Another advantage of the wire reel hub of the invention is that it allows rewinding of the welding wire back to the wire reel especially after the welding work. The wire reel hub of the invention can also act as a brake for the wire reel when the operation of the motor is timely controlled by the welding device. The wire reel hub of the invention allows keeping the welding wire at desired tightness without adjustments by user and regardless of the changing mass of the reel, and thus reducing the unevenness caused by slack in the welding wire.

### BRIEF DESCRIPTION OF THE DRAWINGS

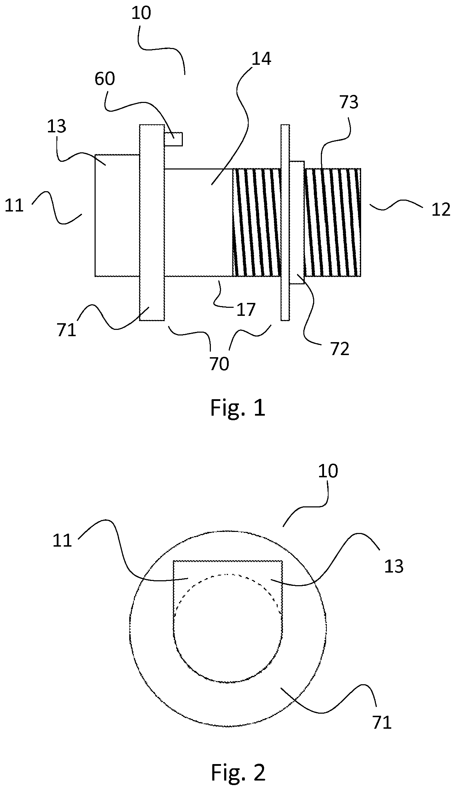

In the following the invention will be described in greater detail by means of preferred embodiments with reference to the accompanying drawings, in which
Figure 1 is a side view of a wire reel hub according to an embodiment of the invention;
Figure 2 is a front view of a wire reel hub according to an embodiment of the invention;
Figure 3 is a schematic cross section of a wire reel hub according to an embodiment of the invention;
Figure 4 is a schematic drawing of a wire reel hub connected to a wire feeder, not forming part of the invention;
Figure 5 is a schematic drawing of a top loaded wire feeder; and
Figure 6 is a schematic drawing of a wire reel hub connected to a wire feeder according to an embodiment of the invention.

### DETAILED DESCRIPTION OF THE INVENTION

The invention relates to a wire reel hub 10 for supporting a wire reel 20 in a welding system comprising a wire feeder 80 comprising a wire reel hub support means 30 for supporting the wire reel hub 10, the wire reel hub 10 comprising
a static part 13 being adapted to be connected unrotatably to the wire reel hub support means 30,
a rotatable part 14 connected rotatably to the static part 13,
an electric motor 40 connected to the static part 13 and to the rotatable part 14 for controlling rotation of the rotatable part 14 in relation to the static part 13,
a power supply means 50 for powering the electric motor 40, and
a receiving means 17 for receiving a wire reel 20 coaxially with the wire reel hub 10.

The wire reel 20 comprises a frame usually made from plastic or metal wire. The frame has a hole for receiving a wire reel hub 10 supporting the wire reel 20 in a wire feeder 80. The hole defines a rotational axis of the wire reel 20.

With the power supply means 50 it is meant any means for supplying power to the electric motor 40. For example the power supply means 50 is an electric wiring connected to a power source.

The electric motor 40 is preferably controlled by a welding power source or a welding wire feeder 80 so that the operation of the motor 40 depends on the welding work functions. For example, when welding is started, the motor 40 aids to unwind the welding wire together with a wire driving means 81 comprised in the wire feeder 80. During welding the motor 40 is typically inactive, and only the internal friction of the motor resists unwinding causing the welding wire to have desired tightness. When welding ends and the wire driving means 81 stops, the motor 40 is controlled to prevent unwinding of the wire reel 20 by causing opposite force to the rotating wire reel 20.

According to an embodiment the receiving means 17 is formed by the rotatable part 14. In other words the wire reel 20 is received on the rotatable part 14 and it is supported by the rotatable part 14.

According to an embodiment the wire reel hub 10 further comprises a rotation locking means 60 for preventing rotation of the wire reel 20 in relation to the rotatable part 14. According to an embodiment the rotation locking means 60 comprises a peg arranged at the rotatable part 14. The peg is arranged to couple with the wire reel 20.

According to the invention the electric motor 40 is at least partly enclosed by the wire reel hub 10. According to an embodiment the electric motor 40 is at least partly enclosed by the static part 13.

According to an embodiment the wire reel hub 10 comprises a first tubular member 15 and a second tubular member 16 arranged at least partly coaxially with the first tubular member 15 and supported by the first tubular member 15, wherein the static part 13 is at least partly formed by the first tubular member 15 and the rotatable part 14 is at least partly formed by the second tubular member 16.

According to an embodiment the wire reel hub 10 comprises an axial locking means 70 for preventing axial movement of the wire reel 20 in relation to the wire reel hub 10. According to an embodiment the axial locking means 70 comprises a flange 71 arranged to the rotatable part 14, an external thread 73 arranged to the rotatable part 14 and a nut 72 attachable to the thread 73 for retaining the wire reel 20 between the flange 71 and the nut 72.

According to an embodiment the electric motor 40 has been adapted rotate to rotatable part 14 in relation to the static part 13 and/or to inhibit rotation of the rotatable part 14 in relation to the static part 13. In other words the electric motor 40 is able to rotate the rotatable part 14 in clockwise direction or in counter clockwise direction in relation to the static part 13 or to act as a brake for the rotatable part 14 in relation to the static part 13.

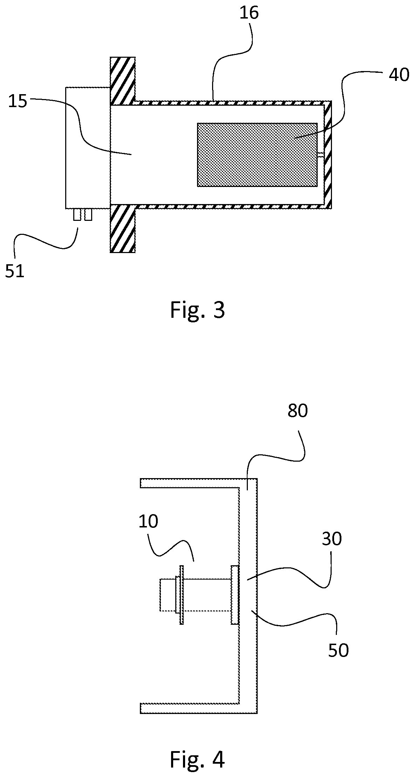

According to an embodiment, not forming part of the invention, the wire reel hub 10 is used in a side loaded wire feeder, i.e. a wire feeder 80 which is openable from the side of the wire feeder 80 for accessing and replacing the wire reel 20. This kind of wire feeder 80 is illustrated in Figure 4. According to an embodiment the static part 13 is fixed to the wire reel hub support means 30. Preferably the static part 13 is bolted or welded to the wire reel hub support means 30.

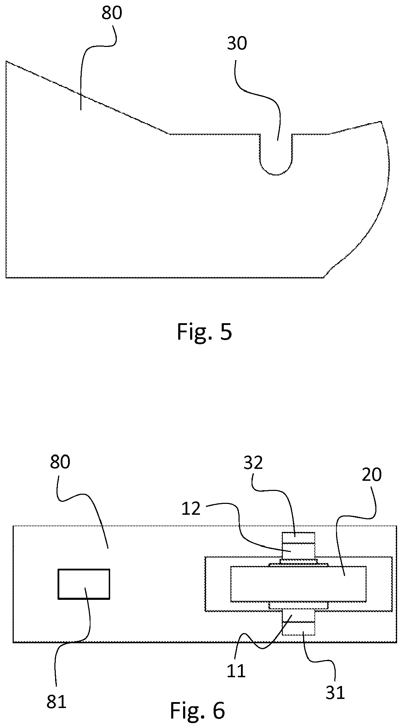

According to an embodiment the wire reel hub 10 is used in a top loaded wire feeder, i.e. a wire feeder 80 which is openable from the top of the wire feeder 80 for accessing and replacing the wire reel 20. This kind of wire feeder is illustrated in Figures 5 and 6. According to the invention the static part 13 is releasably connectable to the wire reel hub support means 30.

According to the invention the wire reel hub support means 30 comprises a first support 31 and a second support 32 and that the wire reel hub 10 comprises a first end 11 and a second end 12 opposite the first end 11, the static part 13 being connected unrotatably to the first end 11, wherein the first end 11 is configured to be supported by the first support 31 and the second end 12 is configured to be supported by the second support 32. Preferably the first end 11 is configured to be supported unrotatably by the first support 31. According to an embodiment the first support 31 comprises a slot and the first end 11 is arranged to form a positive lock with the slot for preventing rotation of the first end 11 in relation to the first support 31.

According to an embodiment the power supply means 50 comprise electric connectors 51 for connecting with corresponding electric connectors of the wire reel hub support means 30. According to an embodiment the electric connectors 51 are arranged at the first end 11. According to an embodiment the electric connectors 51 are arranged at the static part 13.

According to an embodiment the corresponding electric connectors are arranged at the first support 31. According to an embodiment the corresponding electric connectors are arranged at the first support 31 and the second support 32. This way the wire reel hub 10 can be positioned in the wire reel hub support means 30 in both orientations, i.e. the first end 11 can also be supported by the second support 32.

The invention also relates to a wire feeder 80 for feeding welding wire in a welding system, the wire feeder 80 comprising a wire reel hub 10 as described above. Preferably the wire feeder 80 further comprises a wire driving means 81 for driving the welding wire from the wire reel 20 to a welding gun. According to an embodiment the wire driving means 81 is separate from the wire reel hub 10. For example the wire driving means comprises two rotatable rollers for receiving a welding wire therebetween.

## Claims

1. A wire reel hub (10) for supporting a wire reel (20) in a welding system comprising a wire feeder (80) comprising a wire reel hub support means (30) comprising a first support (31) and a second support (32) for supporting the wire reel hub (10), wherein the wire reel hub (10) comprises
a first end (11) and a second end (12) opposite the first end (11), wherein the first end (11) is configured to be supported by the first support (31) and the second end (12) is configured to be supported by the second support (32), and
a receiving means (17) for receiving a wire reel (20) coaxially with the wire reel hub (10),
**characterized in that** the wire reel hub (10) further comprises:
a static part (13) being connected unrotatably to the first end (11) and adapted to be connected unrotatably to the wire reel hub support means (30),
a rotatable part (14) connected rotatably to the static part (13),
an electric motor (40) connected to the static part (13) and to the rotatable part (14) for controlling rotation of the rotatable part (14) in relation to the static part (13),
a power supply means (50) for powering the electric motor (40), wherein
the static part (13) is releasably connectable to the wire reel hub support means (30), and the electric motor (40) is at least partly enclosed by the wire reel hub (10).

2. The wire reel hub (10) according to claim 1, **characterized in that** the receiving means (17) is formed by the rotatable part (14).

3. The wire reel hub (10) according to claim 1 or 2, **characterized in that** the wire reel hub (10) further comprises a rotation locking means (60) for preventing rotation of the wire reel (20) in relation to the rotatable part (14).

4. The wire reel hub (10) according to any one of the preceding claims, **characterized in that** the electric motor (40) is at least partly enclosed by the static part (13).

5. The wire reel hub (10) according to any one of the preceding claims, **characterized in that** the wire reel hub (10) comprises a first tubular member (15) and a second tubular member (16) arranged at least partly coaxially with the first tubular member (15) and supported by the first tubular member (15), wherein the static part (13) is at least partly formed by the first tubular member (15) and the rotatable part (14) is at least partly formed by the second tubular member (16).

6. The wire reel hub (10) according to any one of the preceding claims, **characterized in that** the wire reel hub (10) comprises an axial locking means (70) for preventing axial movement of the wire reel (20) in relation to the wire reel hub (10).

7. The wire reel hub (10) according to claim 6, **characterized in that** the axial locking means (70) comprises a flange (71) arranged to the rotatable part (14), an external thread (73) arranged to the rotatable part (14) and a nut (72) attachable to the thread (73) for retaining the wire reel (20) between the flange (71) and the nut (72).

8. The wire reel hub (10) according to any one of the preceding claims, **characterized in that** the electric motor (40) has been adapted rotate to rotatable part (14) in relation to the static part (13) and/or to inhibit rotation of the rotatable part (14) in relation to the static part (13).

9. The wire reel hub (10) according to any one of the preceding claims, **characterized in that** the first support (31) comprises a slot and the first end (11) is arranged to form a positive lock with the slot for preventing rotation of the first end (11) in relation to the first support (31).

10. The wire reel hub (10) according to any one of the preceding claims, **characterized in that** the power supply means (50) comprise electric connectors (51) for connecting with corresponding electric connectors of the wire reel hub support means (30).

11. The wire reel hub (10) according to claim 10, **characterized in that** the electric connectors (51) are arranged at the first end (11).

12. A wire feeder (80) for feeding welding wire in a welding system, **characterized in that** the wire feeder (80) comprises a wire reel hub (10) according to any one of the preceding claims.

## Patentansprüche

1. Drahtspulenwickelkern (10) zum Tragen einer Drahtspule (20) in einem Schweißsystem, das eine Drahtvorschubvorrichtung (80) umfasst, die ein Wickelkernhalterungmittel (30) umfasst, das eine erste Halterung (31) und eine zweite Halterung (32) zum Haltern des Drahtspulenwickelkerns (10) umfasst, wobei der Drahtspulenwickelkern (10) umfasst:
ein erstes Ende (11) und ein zweites Ende (12) entgegengesetzt zum ersten Ende (11), wobei das erste Ende (11) so ausgelegt ist, dass es von der ersten Halterung (31) gehaltert wird, und das zweite Ende (12) so ausgelegt ist, dass es von der zweiten Halterung (32) gehaltert wird, und
ein Aufnahmemittel (17) zum Aufnehmen einer Drahtspule (20) koaxial zum Drahtspulenwickelkern (10),
**dadurch gekennzeichnet, dass** der Drahtspulenwickelkern (10) ferner umfasst:
ein statisches Teil (13), das mit dem ersten Ende (11) drehfest verbunden ist und eingerichtet ist, um mit dem Wickelkernhalterungsmittel (30) drehfest verbunden zu werden,
ein drehbares Teil (14), das mit dem statischen Teil (13) drehbar verbunden ist,
einen mit dem statischen Teil (13) und mit dem drehbaren Teil (14) verbundenen elektrischen Motor (40) für die Steuerung der Drehung des drehbaren Teils (14) im Verhältnis zum statischen Teil (13),
ein Stromversorgungsmittel (50) zum Speisen des elektrischen Motors (40),
wobei das statische Teil (13) mit dem Wickelkernhalterungsmittel (30) lösbar verbindbar ist
und der elektrische Motor (40) mindestens teilweise vom Drahtspulenwickelkern (10) umschlossen wird.

2. Drahtspulenwickelkern (10) nach Anspruch 1, **dadurch gekennzeichnet, dass** das Aufnahmemittel (17) durch das drehbare Teil (14) ausgebildet ist.

3. Drahtspulenwickelkern (10) nach Anspruch 1 oder 2, **dadurch gekennzeichnet, dass** der Drahtspulenwickelkern (10) ferner ein Verdrehsicherungsmittel (60) umfasst, um ein Drehen der Drahtspule (20) im Verhältnis zum drehbaren Teil (14) zu verhindern.

4. Drahtspulenwickelkern (10) nach einem der vorhergehenden Ansprüche, **dadurch gekennzeichnet, dass** der elektrische Motor (40) mindestens teilweise vom statischen Teil (13) umschlossen wird.

5. Drahtspulenwickelkern (10) nach einem der vorhergehenden Ansprüche, **dadurch gekennzeichnet, dass** der Drahtspulenwickelkern (10) ein erstes röhrenförmiges Element (15) und ein zweites röhrenförmiges Element (16), das mindestens teilweise koaxial zum ersten röhrenförmigen Element (15) angeordnet ist und vom ersten röhrenförmigen Element gestützt wird, umfasst, wobei das statische Teil (13) mindestens teilweise durch das erste röhrenförmige Element (15) ausgebildet wird und das drehbare Teil (14) mindestens teilweise durch das zweite röhrenförmige Element (16) ausgebildet wird.

6. Drahtspulenwickelkern (10) nach einem der vorhergehenden Ansprüche, **dadurch gekennzeichnet, dass** der Drahtspulenwickelkern (10) ein Axialarretierungsmittel (70) umfasst, um eine Axialbewegung der Drahtspule (20) im Verhältnis zum Drahtspulenwickelkern (10) zu verhindern.

7. Drahtspulenwickelkern (10) nach Anspruch 6, **dadurch gekennzeichnet, dass** das Axialarretierungsmittel (70) umfasst: einen am drehbaren Teil (14) angeordneten Flansch (71), ein am drehbaren Teil (14) angeordnetes Außengewinde (73) und eine auf dem Gewinde (73) anbringbare Mutter (72) zum Halten der Drahtspule (20) zwischen dem Flansch (71) und der Mutter (72).

8. Drahtspulenwickelkern (10) nach einem der vorhergehenden Ansprüche, **dadurch gekennzeichnet, dass** der elektrische Motor (40) eingerichtet ist, um das drehbare Teil (14) im Verhältnis zum statischen Teil (13) zu drehen und/oder ein Drehen des drehbaren Teils (14) im Verhältnis zum statischen Teil (13) zu sperren.

9. Drahtspulenwickelkern (10) nach einem der vorhergehenden Ansprüche, **dadurch gekennzeichnet, dass** die erste Halterung (31) einen Schlitz umfasst und das erste Ende (11) so angeordnet ist, dass es einen Formschluss mit dem Schlitz ausbildet, um ein Drehen des ersten Endes (11) im Verhältnis zur ersten Halterung (31) zu verhindern.

10. Drahtspulenwickelkern (10) nach einem der vorhergehenden Ansprüche, **dadurch gekennzeichnet, dass** das Stromversorgungsmittel (50) elektrische Verbinder (51) für die Verbindung mit entsprechenden elektrischen Verbindern des Wickelkernhalterungsmittels (30) umfasst.

11. Drahtspulenwickelkern (10) nach Anspruch 10, **dadurch gekennzeichnet, dass** die elektrischen Verbinder (51) am ersten Ende (11) angeordnet sind.

12. Drahtvorschubvorrichtung (80) zum Zustellen von Schweißdraht in einem Schweißsystem, **dadurch gekennzeichnet, dass** die Drahtvorschubvorrichtung (80) einen Drahtspulenwickelkern (10) nach einem der vorhergehenden Ansprüche umfasst.

## Revendications

1. Axe de bobinage de fil (10) pour appuyer une bobine de fil (20) dans un système de soudage comprenant un dispositif d'avance de fil (80) comprenant un moyen d'appui d'axe de bobinage (30) comprenant un premier appui (31) et un deuxième appui (32) pour appuyer l'axe de bobinage de fil (10), ledit axe de bobinage de fil (10) comprenant :
une première extrémité (11) et une deuxième extrémité (12) opposée à la première extrémité (11), ladite première extrémité (11) étant configurée pour être appuyée par le premier appui (31) et ladite deuxième extrémité (12) étant configurée pour être appuyée par le deuxième appui (32), et
un moyen de réception (17) pour recevoir une bobine de fil (20) coaxialement à l'axe de bobinage de fil (10),
**caractérisé en ce que** ledit axe de bobinage de fil (10) comprend également :
une pièce statique (13) reliée de manière non rotative à la première extrémité (11) et adaptée pour être reliée de manière non rotative au moyen d'appui d'axe de bobinage (30),
une pièce rotative (14) liée de manière rotative à la partie statique (13),
un moteur électrique (40) relié à la pièce statique (13) et à la pièce rotative (14) pour commander la rotation de la pièce rotative (14) par rapport à la pièce statique (13),
un moyen d'alimentation électrique (50) pour alimenter le moteur électrique (40),
ladite pièce statique (13) étant connectable amoviblement au moyen d'appui d'axe de bobinage (30),
et ledit moteur électrique (40) étant enfermé au moins partiellement dans l'axe de bobinage de fil (10).

2. Axe de bobinage de fil (10) selon la revendication 1, **caractérisé en ce que** le moyen de réception (17) est formé par la pièce rotative (14).

3. Axe de bobinage de fil (10) selon la revendication 1 ou 2, **caractérisé en ce que** l'axe de bobinage de fil (10) comprend également un moyen de verrouillage rotatif (60) pour empêcher une rotation de la bobine de fil (20) par rapport à la pièce rotative (14).

4. Axe de bobinage de fil (10) selon l'une des revendications précédentes, **caractérisé en ce que** le moteur électrique (40) est au moins partiellement enfermé dans la partie statique (13).

5. Axe de bobinage de fil (10) selon l'une des revendications précédentes, **caractérisé en ce que** l'axe de bobinage de fil (10) comprend un premier élément tubulaire (15) et un deuxième élément tubulaire (16) disposé de manière au moins partiellement coaxiale au premier élément tubulaire (15) et appuyé par le premier élément tubulaire (15), ladite pièce statique (13) étant formée au moins partiellement par le premier élément tubulaire (15) et ladite pièce rotative (14) étant formée au moins partiellement par le deuxième élément tubulaire (16).

6. Axe de bobinage de fil (10) selon l'une des revendications précédentes, **caractérisé en ce que** l'axe de bobinage de fil (10) comprend un moyen de verrouillage axial (70) pour empêcher un mouvement axial de la bobine de fil (20) par rapport à l'axe de bobinage de fil (10).

7. Axe de bobinage de fil (10) selon la revendication 6, **caractérisé en ce que** le moyen de verrouillage axial (70) comprend une bride (71) disposée sur la pièce rotative (14), un filetage extérieur (73) disposé sur la pièce rotative (14) et un écrou (72) à fixer sur le filetage (73) pour retenir la bobine de fil (20) entre la bride (71) et l'écrou (72).

8. Axe de bobinage de fil (10) selon l'une des revendications précédentes, **caractérisé en ce que** le moteur électrique (40) a été adapté pour faire tourner la pièce rotative (14) par rapport à la pièce statique (13) et/ou pour bloquer la rotation de la pièce rotative (14) par rapport à la pièce statique (13).

9. Axe de bobinage de fil (10) selon l'une des revendications précédentes, **caractérisé en ce que** le premier appui (31) comprend une fente et la première extrémité (11) est disposée de manière à créer un engagement positif avec la fente pour empêcher la rotation de la première extrémité (11) par rapport au premier appui (31).

10. Axe de bobinage de fil (10) selon l'une des revendications précédentes, **caractérisé en ce que** le moyen d'alimentation électrique (50) comprend des connecteurs électriques (51) pour se connecter à des connecteurs électriques correspondants du moyen d'appui d'axe de bobinage (30).

11. Axe de bobinage de fil (10) selon la revendication 10, **caractérisé en ce que** les connecteurs électriques (51) sont disposées sur la première extrémité (11).

12. Dispositif d'avance de fil (80) pour amener un fil de soudure dans un système de soudage, **caractérisé en ce que** le dispositif d'avance de fil (80) comprend un axe de bobinage de fil (10) selon l'une des revendications précédentes.
